(19) Europäisches Patentamt / European Patent Office / Office européen des brevets

(11) **EP 3 816 999 B1**

(12) **EUROPEAN PATENT SPECIFICATION**

(45) Date of publication and mention of the grant of the patent:
**09.11.2022 Bulletin 2022/45**

(51) International Patent Classification (IPC):
**G10L 25/78** (2013.01)   **G10L 25/30** (2013.01)

(52) Cooperative Patent Classification (CPC):
**G10L 25/78; G10L 25/30**

(21) Application number: **21163855.6**

(22) Date of filing: **22.03.2021**

(54) **NEURAL NETWORK BASED DETERMINATION OF THE DIRECTION OF ARRIVAL OF VOICE**

NEURAL NETZWERK BASIERTE EINFALLSRICHTUNGSBESTIMMUNG VON SPRACHE

DÉTERMINATION DE LA DIRECTION D'ARRIVÉE DE LA PAROLE BASÉE SUR UN RÉSEAU NEURONAL

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: **20.07.2020 CN 202010697058**

(43) Date of publication of application:
**05.05.2021 Bulletin 2021/18**

(73) Proprietor: **Beijing Baidu Netcom Science and Technology Co., Ltd.**
**Beijing 100085 (CN)**

(72) Inventors:
- **Li, Xin**
  **Beijing, Beijing 100085 (CN)**
- **Huang, Bin**
  **Beijing, Beijing 100085 (CN)**
- **Zhang, Ce**
  **Beijing, Beijing 100085 (CN)**
- **Bai, Jinfeng**
  **Beijing, Beijing 100085 (CN)**
- **Jia, Lei**
  **Beijing, Beijing 100085 (CN)**

(74) Representative: **Nederlandsch Octrooibureau**
**P.O. Box 29720**
**2502 LS The Hague (NL)**

(56) References cited:
CN-B- 111 696 570    US-B1- 9 972 339

- SOUMITRO CHAKRABARTY ET AL: "Broadband DOA estimation using Convolutional neural networks trained with noise signals", ARXIV.ORG, CORNELL UNIVERSITY LIBRARY, 201 OLIN LIBRARY CORNELL UNIVERSITY ITHACA, NY 14853, 2 May 2017 (2017-05-02), XP081556057, DOI: 10.1109/WASPAA.2017.8170010
- VARZANDEH REZA ET AL: "Exploiting Periodicity Features for Joint Detection and DOA Estimation of Speech Sources Using Convolutional Neural Networks", ICASSP 2020 - 2020 IEEE INTERNATIONAL CONFERENCE ON ACOUSTICS, SPEECH AND SIGNAL PROCESSING (ICASSP), IEEE, 4 May 2020 (2020-05-04), pages 566-570, XP033794406, DOI: 10.1109/ICASSP40776.2020.9054754 [retrieved on 2020-04-01]
- XIAOLEI ZHAO ET AL: "Sub-voice Detection and Recognition based on Hybrid Audio Segmentation and Deep Learning", ROBOTICS, INTELLIGENT CONTROL AND ARTIFICIAL INTELLIGENCE, ACM, 2 PENN PLAZA, SUITE 701 NEW YORK NY 10121-0701 USA, 20 September 2019 (2019-09-20), pages 143-147, XP058445030, DOI: 10.1145/3366194.3366219 ISBN: 978-1-4503-7298-5

## Description

TECHNICAL FIELD

The present disclosure relates to the field of computer technology, in particular to the field of voice processing and deep learning technology, and more particular to a method and apparatus for detecting a voice.

BACKGROUND

Direction of arrival (DOA) estimation is to estimate the direction of arrival of a wave, that is, to estimate the direction of a sound source. The source here may be an audio source or other signal source that may be used for communication. Voice activity detection (VAD) may detect whether a current audio includes a voice signal (i.e., human voice signal), that is, judge the audio and distinguish a human voice signal from various background noises.

The direction of arrival estimation in the related art usually uses a receiving apparatus array to acquire a signal, and determines a direction of arrival line from the receiving apparatus to the signal, and uses the direction of arrival line to perform triangulation to determine the direction of arrival. It is known in the art, from S.Chakrabarty and E.A.P. Habets "BROADBAND DOA ESTIMATION USING CONVOLUTIONAL NEURAL NETWORKS TRAINED WITH NOISE SIGNALS", 2017 IEEE Workshop on Applications of Signal Processing to Audio and Acoustics, and from R.Varzandeh et al. "EXPLOITING PERIODICITY FEATURES FOR JOINT DETECTION AND DOA ESTIMATION OF SPEECH SOURCES USING CONVOLUTIONAL NEURAL NETWORKS", IEEE ICASSP 2020, techniques using convolutional neural networks to determine the direction of arrival, DOA, of sound sources.

SUMMARY

Methods according to claims 1 and 6, and apparatus for detecting a voice according to claim 11, an electronic device according to claim 12 and a storage medium according to claim 13 are provided.

According to the solution of the present disclosure, each direction interval may be separately predicted, so as to accurately determine whether the target voice has a sub-voice in each direction interval, to realize accurate prediction.

BRIEF DESCRIPTION OF THE DRAWINGS

By reading the detailed description of non-limiting embodiments with reference to the following accompanying drawings, other features, objectives and advantages of the present disclosure will become more apparent.

Fig. 1 is an example system architecture diagram in which some embodiments of the present disclosure may be implemented;
Fig. 2 is a flowchart of a method for detecting a voice according to an embodiment of the present disclosure;
Fig. 3A is a schematic diagram of an application scenario of the method for detecting a voice according to an embodiment of the present disclosure;
Fig. 3B is a schematic diagram of a prediction process of a deep neural network for voice detection according to an embodiment of the present disclosure;
Fig. 4A is a flowchart of a method for training a deep neural network according to an embodiment of the present disclosure;
Fig. 4B is a schematic diagram of a training network structure of a deep neural network for voice detection according to an embodiment of the present disclosure;
Fig. 5 is a schematic structural diagram of an apparatus for detecting a voice according to an embodiment of the present disclosure; and
Fig. 6 is a block diagram of an electronic device used to implement the method for detecting a voice according to embodiments of the present disclosure.

DETAILED DESCRIPTION OF EMBODIMENTS

The following describes example embodiments of the present disclosure with reference to the accompanying drawings, which include various details of the embodiments of the present disclosure to facilitate understanding, and should be regarded as merely examples. Therefore, those of ordinary skill in the art should realize that various changes and modifications may be made to the embodiments described herein without departing from the scope defined by the appended claims. Likewise, for clarity and conciseness, descriptions of well-known functions and structures are omitted in the following description.

It should be noted that the embodiments in the present disclosure and the features in the embodiments may be combined with each other on a non-conflict basis. The present disclosure will be described below in detail with reference to the accompanying drawings and in combination with the embodiments.

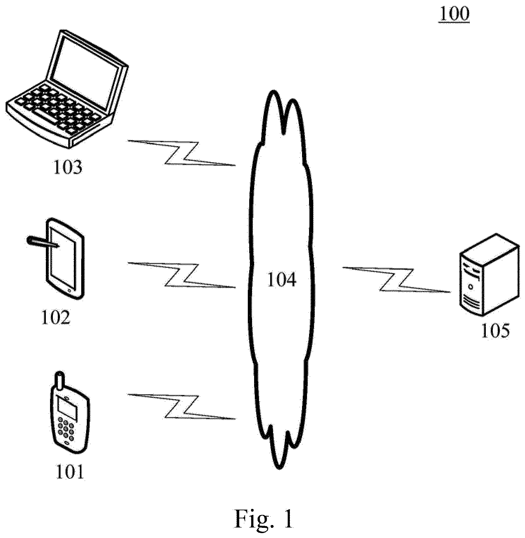

Fig. 1 illustrates an example system architecture 100 of a method for detecting a voice or an apparatus for detecting a voice in which embodiments of the present disclosure may be implemented.

As shown in Fig. 1, the system architecture 100 may include terminal devices 101, 102, and 103, a network 104, and a server 105. The network 104 is used to provide a communication link medium between the terminal devices 101, 102, and 103 and the server 105. The network 104 may include various types of connections, such as wired, wireless communication links, or optic fibers.

A user may interact with the server 105 through the network 104 using the terminal devices 101, 102 and 103 to receive or send messages and the like. Various communication client applications may be installed on the terminal devices 101, 102, 103, such as voice detection applications, live broadcast applications, instant messaging tools, email clients, or social platform software.

The terminal devices 101, 102, and 103 may be hardware or software. When the terminal devices 101, 102, and 103 are hardware, they may be various electronic devices having display screens, including but not limited to smart phones, tablet computers, E-book readers, laptop portable computers, desktop computers, or the like. When the terminal devices 101, 102, and 103 are software, they may be installed in the electronic devices listed above. They may be implemented as, for example, a plurality of software programs or software modules (for example, a plurality of software programs or software modules for providing distributed services), or as a single software program or software module, which is not specifically limited herein.

The server 105 may be a server that provides various services, for example, a backend server that provides support for the terminal devices 101, 102, and 103. The backend server may process such as analyze a received target voice and other data, and feed back a processing result (for example, a prediction result of a deep neural network) to the terminal devices.

It should be noted that the method for detecting a voice provided by the embodiments of the present disclosure may be performed by the server 105 or the terminal devices 101, 102 and 103, and accordingly, the apparatus for detecting a voice may be provided in the server 105 or the terminal devices 101, 102 and 103.

It should be understood that the number of terminal devices, networks, and servers in Fig. 1 is merely illustrative. Depending on the implementation needs, there may be any number of terminal devices, networks, and servers.

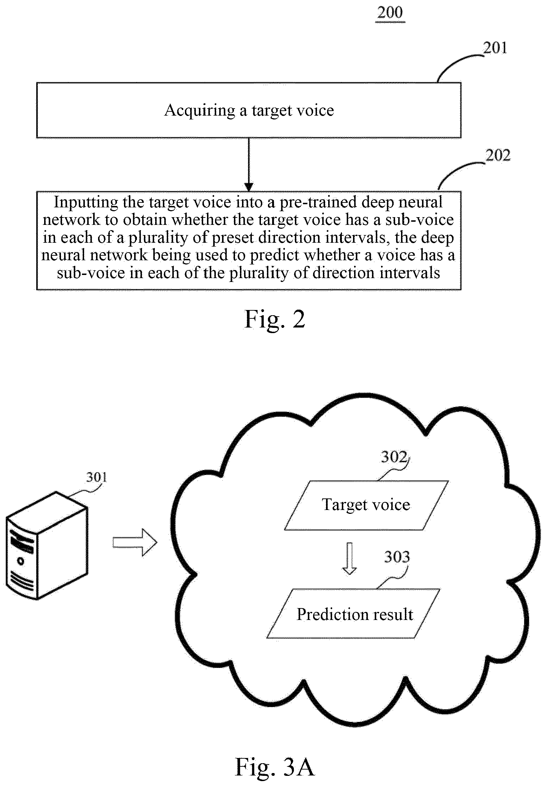

With further reference to Fig. 2, a flow 200 of a method for detecting a voice according to an embodiment of the present disclosure is illustrated. The method for detecting a voice includes the following steps.

Step 201, acquiring a target voice.

In the present embodiment, an executing body (for example, the server or terminal devices shown in Fig. 1) on which the method for detecting a voice operates may acquire the target voice. In practice, the target voice may be a single-channel voice or a multichannel voice, that is, the target voice may be a voice received by one microphone, or a voice received by a microphone array composed of microphones in a plurality of different receiving directions.

Step 202, inputting the target voice into a pre-trained deep neural network to obtain whether the target voice has a sub-voice in each of a plurality of preset direction intervals, the deep neural network being used to predict whether a voice has a sub-voice in each of the plurality of direction intervals.

In the present embodiment, the executing body may input the target voice into the pre-trained deep neural network to obtain a prediction result output by the deep neural network. Specifically, the prediction result may be whether the target voice has the sub-voice in each of the plurality of preset direction intervals. The target voice is a voice emitted by at least one sound source, where each sound source emits one sub-voice in the target voice, and each sound source corresponds to one direction of arrival. It should be noted that in the present disclosure, a plurality of refers to at least two.

Specifically, the deep neural network of the claimed invention comprises at least a combination of a convolutional neural network, a feature-extraction network and a Fourier transform network.

The prediction result may include a result of predicting whether there is the sub-voice for each of the plurality of direction intervals. For example, all directions include 360°, and if each direction interval includes 120°, then the plurality of direction intervals may include 3 direction intervals. If each direction interval includes 36°, then the plurality of direction intervals may include 10 direction intervals. If each direction interval includes 30°, then the plurality of direction intervals may include 12 direction intervals.

The prediction result of the deep neural network may comprehensively and separately predict whether there is the sub-voice in each direction interval, and each direction interval has a corresponding result in the prediction result. For example, if there are 12 direction intervals, there may be 12 results in the prediction result, and different direction intervals correspond to different results in the 12 results.

In practice, the prediction result may be qualitative. For example, the prediction result may be "1" indicating that there is the sub-voice, or "0" indicating that there is no sub-voice. Alternatively, the prediction result may also be quantitative. For example, the prediction result may be a probability p indicating that the sub-voice exists, such as "0.96", and a value range of the probability is [0, 1]. The prediction result may have a threshold value, such as 0.95, that is, if the probability is greater than or equal to the threshold value, then the target voice has the sub-voice in the direction interval. In addition, the prediction result may also indicate no sub-voice with a probability q, such as "0.06", and a range of the probability is [1, 0]. The prediction result may also have a threshold value, such as 0.05, that is, if the probability is less than or equal to the threshold value, then the target voice has the sub-voice in the direction interval.

The method provided in the above embodiment of the present disclosure separately predicts each direction interval, so as to accurately determine whether the target voice has the sub-voice in each direction interval, thereby realizing accurate prediction.

With further reference to Fig. 3A, Fig. 3A is a schematic diagram of an application scenario of the method for detecting a voice according to the present embodiment. In the application scenario of Fig. 3A, an executing body 301 acquires a target voice 302. The executing body 301 inputs the target voice 302 into a pre-trained deep neural network, to obtain a prediction result 303 of the deep neural network: whether the target voice has a sub-voice in each of 3 preset direction intervals. Specifically, there is a sub-voice in a first direction interval and a second direction interval, and no sub-voice in a third direction interval. The deep neural network is used to predict whether the input voice has a sub-voice in each of the above 3 direction intervals.

According to an embodiment of the claimed invention, the deep neural network includes a multi-head fully connected network, and an output of the multi-head fully connected network is used to represent whether the voice has a sub-voice in each of the plurality of direction intervals respectively, where direction intervals corresponding to any two fully connected networks in the multi-head fully connected network are different.

In the present embodiment, a fully connected network in the deep neural network is a multi-head fully connected network. The executing body on which the method for detecting a voice operates (for example, the server or the terminal devices shown in Fig. 1) uses a plurality of fully connected networks included in the multi-head fully connected network to perform fully connected processing, and the prediction result output by the deep neural network may include all or part of the output of each fully connected network. There is a corresponding relationship between the fully connected network and the direction interval, that is, a fully connected network corresponds to a direction interval in a plurality of direction intervals. Accordingly, a fully connected network predicts whether the target voice has a sub-voice in the direction interval corresponding to the fully connected network.

An input of the multi-head fully connected network is the same as an input of other fully connected networks in this field. For example, the input may be a voice feature of the target voice.

In the present embodiment, the multi-head fully connected network is used to accurately predict sub-voices in different direction intervals.

In some optional implementations of the present embodiment, a fully connected network in the multi-head fully connected network includes a fully connected layer, an affine layer and a softmax layer (logistic regression layer).

In these optional implementations, the multi-head fully connected network may include the fully connected (FC) layer (for example, a fully connected layer FC-relu connected with an activity relu layer), the affine layer, and the softmax layer. These implementations may use processing layers in the fully connected network to perform more refined processing, which helps to obtain a more accurate prediction result.

According to an embodiment of the claimed invention, the deep neural network further includes a feature-extraction network and a convolutional neural network. The inputting the target voice into a pre-trained deep neural network to obtain whether the target voice has a sub-voice in each of a plurality of preset direction intervals, may include: inputting the target voice into the pre-trained deep neural network, extracting a voice feature of the target voice based on the feature-extraction network; and processing the voice feature using the convolutional neural network to obtain a voice feature after convolution to be input into the multi-head fully connected network.

In this embodiment, the executing body first uses the feature-extraction (FE) network to extract the voice feature of the target voice, and uses the convolutional neural network (CNN, such as a convolutional neural layer CNN-relu connected with an activity relu layer) to perform convolution on the voice feature, thereby obtaining the voice feature after convolution. Specifically, the convolutional neural network may include one or more than two convolutional layers. In addition, the convolutional neural network may also include an activation layer.

In practice, the executing body may use various methods to extract the voice feature of the target voice based on the feature-extraction network. For example, the feature-extraction network may be used to perform spectrum analysis. The executing body may use the feature-extraction network to perform spectrum analysis on the target voice, to obtain a spectrogram of the target voice, and use the spectrogram as the voice feature to be input into the convolutional neural network.

These implementations extract the voice feature and perform convolution on the voice feature to extract the voice feature and perform more sufficient processing on the voice feature, which helps to allow the multi-head fully connected network make better use of the voice feature after convolution to obtain an accurate prediction result.

In the implementation of the claimed invention, the deep neural network further includes a Fourier transform network; and the extracting a voice feature of the target voice based on the feature-extraction network in these implementations, includes: performing Fourier transform on the target voice using the Fourier transform network to obtain a plural form vector; normalizing a real part and an imaginary part of the vector using the feature-extraction network to obtain a normalized real part and a normalized imaginary part; and using the normalized real part and the normalized imaginary part as the voice feature of the target voice.

In this implementation, the executing body performs a fast Fourier transform (FFT) on the target voice, and a result obtained is a vector. Moreover, the vector is expressed in the plural form, (i.e. a complex vector) for example, it may be expressed as $x+yj$, where $x$ is the real part, $y$ is the imaginary part, and $j$ is the unit of the imag-

inary part. Correspondingly, $\bar{x} = x/\sqrt{x^2 + y^2}$ is the normalized real part, and $\bar{y} = y/\sqrt{x^2 + y^2}$ is the normalized imaginary part. It may be seen that the above normalized real part and normalized imaginary part include phase information in all directions. In the existing art, a phase of the vector obtained by FFT is often directly used as the voice feature, and due to the periodicity of the phase (generally $2\pi$ is used as the period), the phase calculated using this method often has several deviations of $2\pi$ from a true phase.

This implementation determines the normalized real part and the normalized imaginary part as the voice feature, avoiding the problem of introducing a phase deviation in the existing art. In addition, a variety of features are determined for the voice, which helps to obtain a more accurate prediction result.

Optionally, the method may further include: determining a logarithm of a modulus length of the vector using the feature-extraction network; and the using the normalized real part and the normalized imaginary part as the voice feature of the target voice, includes: using the normalized real part, the normalized imaginary part and the logarithm as the voice feature of the target voice.

Specifically, determining the modulus length for the vector in the plural form is to determine a root result of a sum of squares of the real part and the imaginary part of the vector.

The executing body may input the obtained normalized real part, normalized imaginary part and the logarithm to the convolutional neural network in three different channels to perform convolution. The logarithm may provide sufficient information for detecting a voice.

In some optional application scenarios of these implementations, the inputting the target voice into a pre-trained deep neural network to obtain whether the target voice has a sub-voice in each of a plurality of preset direction intervals, may further include: for each fully connected network in the multi-head fully connected network, inputting the voice feature after convolution into the fully connected network to obtain a probability that the target voice has a sub-voice in a direction interval corresponding to the fully connected network.

In these optional application scenarios, the executing body may input the voice feature after convolution output by the convolutional neural network into each fully connected network in the multi-head fully connected network, so as to obtain the probability that the target voice has the sub-voice in the direction interval corresponding to each fully connected network. In practice, the probability here may be the above probability p indicating that the sub-voice exists, and/or the probability q indicating no sub-voice.

These application scenarios may use the multi-head fully connected network to accurately determine the probability of whether the target voice has a sub-voice in each direction interval.

In some alternative cases of these optional scenarios, the deep neural network may further include a concate layer (merging layer); and the inputting the target voice into a pre-trained deep neural network to obtain whether the target voice has a sub-voice in each of a plurality of preset direction intervals, may further include: merging probabilities corresponding to the multi-head fully connected network to obtain a to-be-output probability set.

In these alternative cases, the executing body may use the concate layer to merge probabilities obtained by the fully connected networks in the multi-head fully connected network, and use a merged processing result as the prediction result of the deep neural network.

If the prediction result of each fully connected network is a single probability, such as the probability p, the merging processing may be to merge the probabilities obtained by the fully connected networks into the probability set. If the prediction result of each fully connected network is at least two probabilities, such as the probability p and probability q, the merging processing may be to merge one of the at least two probabilities obtained by each fully connected network, such as the probability p, into the probability set. Specifically, if a loss function used in training of the deep neural network is a cross-entropy function, then the prediction result includes the probability p and probability q, and p+q=1. Therefore, one of the above probabilities, such as the probability p, may be selected as the prediction result for output.

In practice, the merging processing may also include transposition processing, which is represented by a symbol T, the probability set is a set of $p_n$, and $p_n$ represents a probability that there is a sub-voice in a direction interval n, $p_n = [p_0, p_1, \cdots, p_{N-1}]^T$, where n = 0, 1, $\cdots$, N - 1.

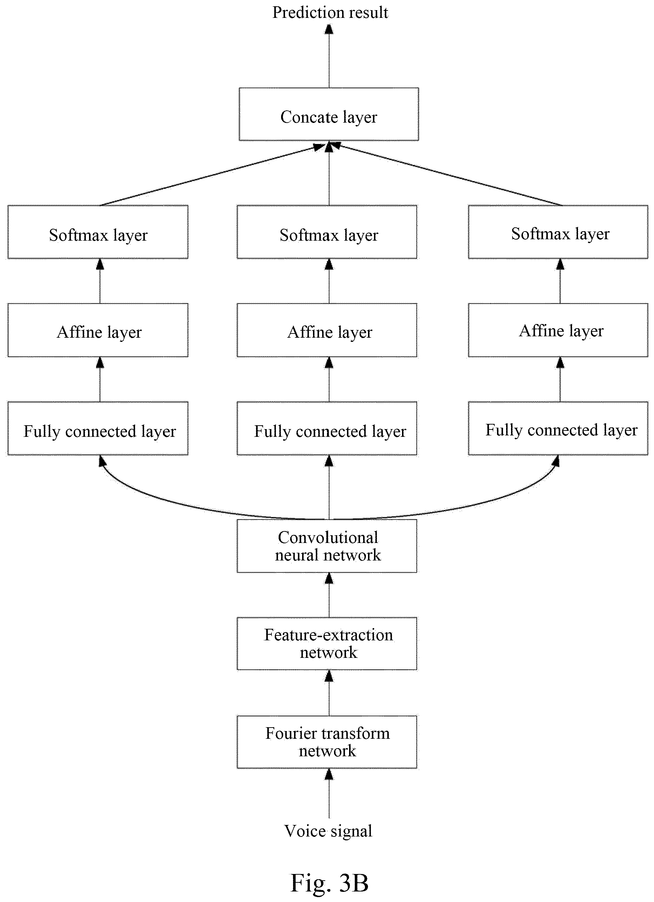

As shown in Fig. 3B, the figure shows the whole process of inputting voice information into the deep neural network for prediction to obtain a prediction result.

In these cases, the executing body may use the concate layer to merge the probabilities, so that the deep neural network may output at one time whether the target voice has a sub-voices in a plurality of direction intervals.

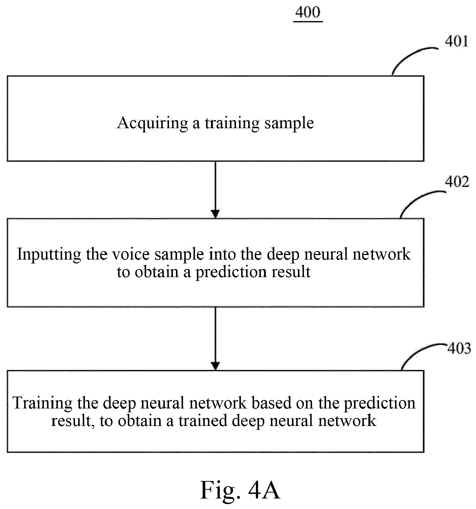

With further reference to Fig. 4A, a flow 400 of an embodiment of a method for training a deep neural network is illustrated. The flow 400 includes the following steps:

Step 401, acquiring a training sample, where a voice sample in the training sample includes a sub-voice in at least one preset direction interval.

In the present embodiment, an executing body (for example, the server or terminal devices shown in Fig. 1) on which the method for training a deep neural network operates may acquire the training sample. The training sample includes a voice sample for training, and the voice sample may include a sub-voice in one or more preset direction intervals.

Step 402, inputting the voice sample into the deep neural network to obtain a prediction result, the deep neural network being used to predict whether the voice has a sub-voice in each of a plurality of direction intervals.

In the present embodiment, the executing body may input the voice sample into the deep neural network, perform forward propagation in the deep neural network, to obtain the prediction result output by the deep neural network. Specifically, the deep neural network into which the voice sample is input is a to-be-trained deep neural network.

Step 403, training the deep neural network based on the prediction result, to obtain a trained deep neural network.

In the present embodiment, the executing body trains the deep neural network based on the prediction result, to obtain the trained deep neural network. The training sample may include a real result corresponding to the voice sample, that is, whether the voice sample has a sub-voice in each of the plurality of direction intervals.

Specifically, the executing body may determine a loss value based on the prediction result and the real result, and use the loss value to perform back propagation in the deep neural network, thereby obtaining the trained deep neural network.

In the present embodiment, the deep neural network obtained by training is configured to separately predict for each direction interval, so as to accurately determine whether the voice has a sub-voice in each direction interval, realizing accurate prediction.

In the training embodiment of the claimed invention, the deep neural network includes a multi-head fully connected network, and an output of the multi-head fully connected network is used to represent whether the voice has a sub-voice in each of the plurality of direction intervals respectively, where direction intervals corresponding to any two fully connected networks in the multi-head fully connected network are different.

This embodiment further includes in step 402 inputting the voice sample into the deep neural network, determining a feature of the voice sample using the deep neural network to obtain a to-be-processed voice feature, where the training sample further includes direction information of a sub-voice in the voice sample, and the to-be-processed voice feature includes a to-be-processed sub-voice feature corresponding to the sub-voice in the voice sample; determining, for each to-be-processed sub-voice feature of the sub-voice, in the multi-head fully connected network, a fully connected network corresponding to a direction interval in which a direction indicated by the direction information of the sub-voice is located, and using the fully connected network as a fully connected network into which the to-be-processed sub-voice feature is to-be-input; and determining whether the voice sample has a sub-voice in each of a plurality of direction intervals using the multi-head fully connected network.

According to optional application scenarios, the executing body may determine the feature of the voice sample, and use the determined feature as the to-be-processed voice feature. Specifically, the executing body may use various methods to determine the feature of the voice sample. For example, the executing body may use a feature-extraction layer to extract the feature of the voice sample, and use the extracted feature as the to-be-processed voice feature. In addition, the executing body may also perform other processing on the extracted feature, and use a processing result as the to-be-processed voice feature. For example, the executing body may input the extracted feature into a preset model, and use a result output by the preset model as the to-be-processed voice feature.

The executing body may determine, for each to-be-processed sub-voice feature, the direction interval in which the direction indicated by the direction information of the sub-voice is located using a feature-oriented network,, thereby determining the fully connected network corresponding to the direction interval, and use the corresponding fully connected network as the fully connected network into which the to-be-processed sub-voice feature is to-be-input.

The fully-connected network in the multi-head fully-connected network outputs whether the voice sample has a sub-voice in each of the plurality of direction intervals.

In some alternative cases of these optional application scenarios, the determining, for each to-be-processed sub-voice feature of the sub-voice, in the multi-head fully connected network, a fully connected network corresponding to a direction interval in which a direction indicated by the direction information of the sub-voice is located, and using the fully connected network as a fully connected network into which the to-be-processed sub-voice feature is to-be-input, may include: determining, for each to-be-processed sub-voice feature of the sub-voice, in the multi-head fully connected network, the fully connected network corresponding to the direction interval in which the direction indicated by the direction information of the sub-voice is located using the feature-oriented network, and using the fully connected network as the fully connected network into which the to-be-processed sub-voice feature is to-be-input.

In these cases, the executing body may determine the fully connected network corresponding to each to-be-processed sub-voice feature using the feature-oriented network, that is, the fully connected network into which the to-be-processed sub-voice feature is to-be-input. Therefore, for each to-be-processed sub-voice feature, the executing body may input the to-be-processed sub-voice feature into the fully connected network corresponding to the to-be-processed sub-voice feature.

In these cases, the executing body may use the feature-oriented network to allocate the to-be-processed sub-voice features to the respective fully connected networks in the training process, so that each fully connected network learns the feature of the sub-voice in a specific direction interval during training, so as to improve an accuracy of detecting the sub-voice in the direction interval.

In some alternative cases of these optional application scenarios, the determining whether the voice sample has a sub-voice in each of a plurality of direction intervals using the multi-head fully connected network in these application scenarios, may include: for each to-be-processed sub-voice feature, using the to-be-processed sub-voice feature for forward propagation on the corresponding fully connected network to obtain a probability that the voice sample has a sub-voice in each of the plurality of direction intervals.

In these cases, the executing body may use each to-be-processed sub-voice feature to perform forward propagation on the fully connected network corresponding to each to-be-processed sub-voice feature. A result of the forward propagation is the probability that the voice sample has a sub-voice in each of the plurality of direction intervals.

In these cases, the executing body may make accurate prediction based on the probability of the sub-voice in each direction interval.

According to the training embodiment of the claimed invention, the determining a feature of the voice sample using the deep neural network to obtain a to-be-processed voice feature, includes; extracting the voice feature of the voice sample based on the feature-extraction network; and processing the extracted voice feature using the convolutional neural network to obtain the to-be-processed voice feature to be input into the multi-head fully connected network.

In this case, the executing body may use the feature-extraction network and the convolutional neural network to fully extract the feature of the voice sample, so as to facilitate subsequent use of the feature.

Further, according this embodiment, the deep neural network further includes a Fourier transform network; the extracting a voice feature of the voice sample based on the feature-extraction network, includes performing Fourier transform on the voice sample using the Fourier transform network to obtain a plural form vector (i.e. a complex vector) represented by a real part and an imaginary part; nominalizing the real part and the imaginary part of the vector using the feature-extraction network to obtain a normalized real part and a normalized imaginary part; and using the normalized real part and the normalized imaginary part as the voice feature of the voice sample.

In these cases, the executing body determines the normalized real part and the normalized imaginary part as the voice feature, avoiding the problem of introducing a phase deviation in the existing art. In addition, a variety of features are determined for the voice, which helps the trained deep neural network predict a more accurate prediction result.

Optionally, the training the deep neural network based on the prediction result, to obtain a trained deep neural network, may include: performing back propagation in the training network structure based on the obtained probability, to update a parameter of the convolutional neural network and a parameter of the multi-head fully connected network.

In practice, the executing body may determine a loss value of the obtained probability based on the obtained probability, the real result in the training sample such as a real probability (such as "1" for existence and "0" for non-existence), and a preset loss function (such as a cross-entropy function), and use the loss value to perform back propagation to update the parameter of the convolutional neural network and the parameter of the multi-head fully connected network.

Optionally, the performing back propagation in the training network structure based on the obtained probability, to update a parameter of the convolutional neural network and a parameter of the multi-head fully connected network, may include: for each obtained probability, determining a loss value corresponding to the probability, and performing back propagation in the fully connected network that obtains the probability using the loss value, to obtain a first result corresponding to the probability; merging the obtained first results using the feature-oriented network to obtain a first result set; and performing back propagation in the convolutional neural network using the first result set to update the parameter of the convolutional neural network and the parameter of the multi-head fully connected network.

In practice, the executing body may use the probability obtained in each fully connected network, and the real result of whether the voice sample has a sub-voice in the direction interval corresponding to the fully connected network labeled in the training sample, that is, the real probability, and the preset loss function, to determine the loss value corresponding to the fully connected network. In addition, the loss value corresponding to the fully connected network is used to perform back propagation in the fully connected network, so as to obtain a result of the back propagation corresponding to each fully connected network, that is, the first result corresponding to each fully connected network.

The executing body may merge the first results corresponding to the respective fully connected networks using the feature-oriented network to obtain the first result set. Then, the executing body may perform back propagation in the convolutional neural network using the first result set to update the parameter of the convolutional neural network and the parameter of the multi-head fully connected network.

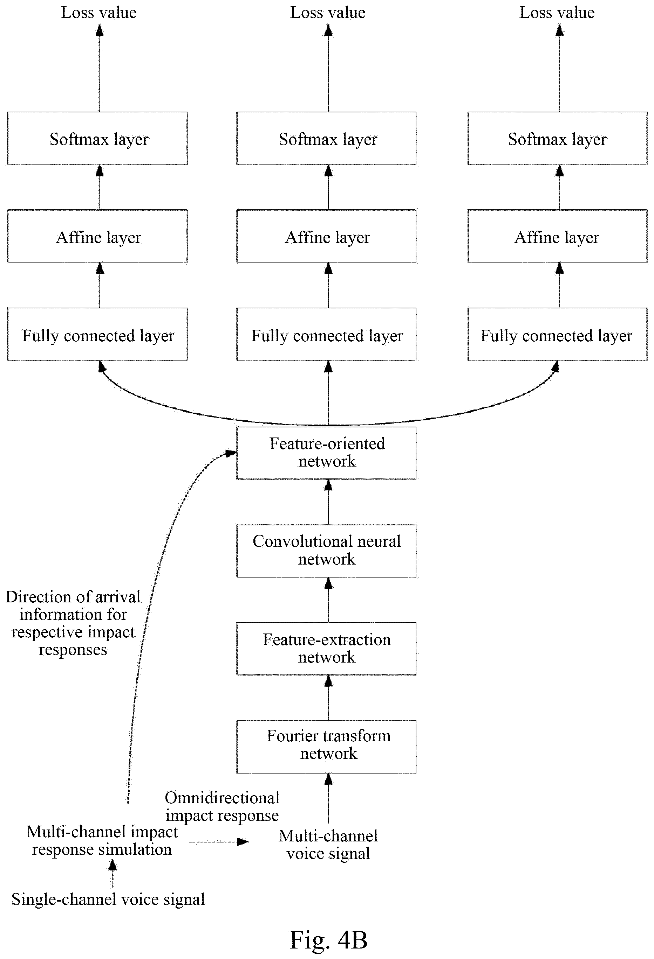

As shown in Fig. 4B, a training network structure of the deep neural network is shown in the figure, where the DOA-Splitter is the feature-oriented network.

In these implementations, back propagation may be performed in the convolutional neural network and the multi-head fully connected network to update the parameters in the two networks. Moreover, these implementations may also use the feature-oriented network to merge the back propagation results of the fully connected networks, so that back propagation may be continued in the convolutional neural network, realizing back propagation in the entire model and parameter updating.

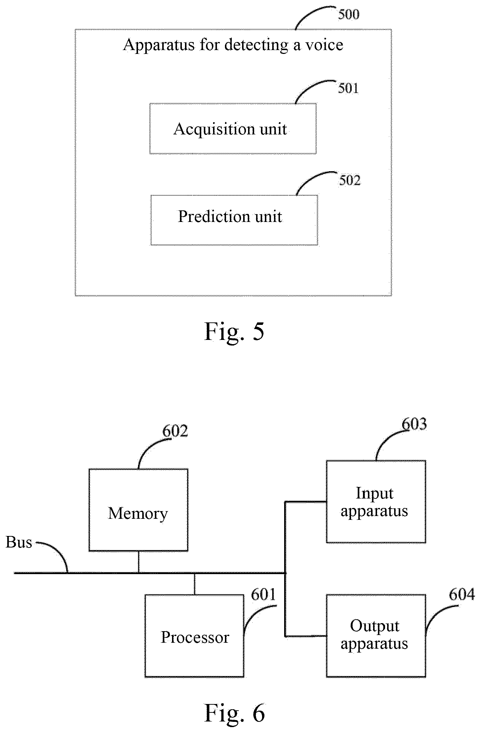

With further reference to Fig. 5, as an implementation of the method shown in Fig. 2 and Fig. 3 above, an embodiment of the present disclosure provides an apparatus for detecting a voice, and the apparatus embodiment corresponds to the method embodiment as shown in Fig. 2. In addition to the features described below, the apparatus embodiment may also include the same or corresponding features or effects as the method embodiment shown in Fig. 2. The apparatus may be specifically applied to various electronic devices.

As shown in Fig. 5, an apparatus 500 for detecting a voice of the present embodiment includes: an acquisition unit 501 and a prediction unit 502. The acquisition unit 501 is configured to acquire a target voice. The prediction unit 502 is configured to input the target voice into a pre-trained deep neural network to obtain whether the target voice has a sub-voice in each of a plurality of preset direction intervals, the deep neural network being used to predict whether the voice has a sub-voice in each of the plurality of direction intervals.

In the present embodiment, for the specific processing and technical effects thereof of the acquisition unit 501 and the prediction unit 502 in the apparatus 500 for detecting a voice, reference may be made to the relevant descriptions of step 201 and step 202 in the corresponding embodiment of Fig. 2 respectively, and repeated description thereof will be omitted.

In the present embodiment, the deep neural network includes a multi-head fully connected network, and an output of the multi-head fully connected network is used to represent whether the voice has the sub-voice in each of the plurality of direction intervals respectively, where direction intervals corresponding to any two fully connected networks in the multi-head fully connected network are different.

In the present embodiment, the deep neural network further includes a feature-extraction network and a convolutional neural network. The prediction unit is further configured to input the target voice into the pre-trained deep neural network to obtain whether the target voice has the sub-voice in each of the plurality of preset direction intervals by: inputting the target voice into the pre-trained deep neural network, and extracting a voice feature of the target voice based on the feature-extraction network; and processing the voice feature using the convolutional neural network to obtain a voice feature after convolution to be input into the multi-head fully connected network.

In the present embodiment, the deep neural network further includes a Fourier transform network. The prediction unit is further configured to perform the extracting the voice feature of the target voice based on the feature-extraction network by: performing Fourier transform on the target voice using the Fourier transform network to obtain a plural form vector (i.e. a complex vector) represented by a real part and an imaginary part; normalizing the real part and the imaginary part of the vector using the feature-extraction network to obtain a normalized real part and a normalized imaginary part; and using the normalized real part and the normalized imaginary part as the voice feature of the target voice.

In some optional implementations of the present embodiment, the apparatus further includes: a determination unit, configured to determine a logarithm of a modulus length of the vector using the feature-extraction network. The prediction unit is further configured to use the normalized real part and the normalized imaginary part as the voice feature of the target voice by: using the normalized real part, the normalized imaginary part and the logarithm as the voice feature of the target voice.

In some optional implementations of the present embodiment, the prediction unit is further configured to input the target voice into the pre-trained deep neural network to obtain whether the target voice has the sub-voice in each of the plurality of preset direction intervals by: for each fully connected network in the multi-head fully connected network, inputting the voice feature after convolution into the fully connected network to obtain a probability that the target voice has a sub-voice in a direction interval corresponding to the fully connected network.

In some optional implementations of the present embodiment, the deep neural network further includes a concate layer. The prediction unit is further configured to input the target voice into the pre-trained deep neural network to obtain whether the target voice has the sub-voice in each of the plurality of preset direction intervals by: merging probabilities corresponding to the multi-head fully connected network to obtain a to-be-output probability set.

In some optional implementations of the present embodiment, a fully connected network in the multi-head fully connected network includes a fully connected layer, an affine layer and a softmax layer.

In the present embodiment, a training network structure of the deep neural network further includes a feature-oriented network, a Fourier transform network, a feature-extraction network and a convolutional neural network. Training steps of the network structure include: perform forward propagation on a voice sample in a training sample in the Fourier transform network, the feature-extraction network and the convolutional neural network of the deep neural network to obtain a voice feature after convolution of the voice sample, the training sample including direction information of different sub-voices in the voice sample, and the voice feature after convolution including sub-voice features after convolution corresponding to the different sub-voices; determining, for each sub-voice feature after convolution of a sub-voice in the voice feature after convolution of the voice sample using the feature-oriented network, a fully connected network corresponding to a direction interval in which a direction indicated by the direction information of the sub-voice is located, and using the fully connected network as a fully connected network into which the sub-voice feature after convolution is to-be-input; performing forward propagation on the multi-head fully connected network to obtain a probability that the voice sample has a sub-voice in each of a plurality of direction intervals; and performing back propagation in the training network structure based on the obtained probability, to update a parameter of the convolutional neural networks and a parameter of the multi-head fully connected network.

In some optional implementations of the present embodiment, the performing back propagation in the training network structure based on the obtained probability, to update a parameter of the convolutional neural networks and a parameter of the multi-head fully connected network, includes: for each obtained probability, determining a loss value corresponding to the probability, and performing back propagation in the fully connected network that obtains the probability using the loss value, to obtain a first result corresponding to the probability; merging the respective obtained first results using the feature-oriented network to obtain a first result set; and performing back propagation in the convolutional neural network using the first result set to update the parameter of the convolutional neural networks and the parameter of the multi-head fully connected network.

As an implementation of the method shown in the above figures, an embodiment of the present disclosure provides an apparatus for training a deep neural network. The apparatus embodiment corresponds to the method embodiment shown in Fig. 4A and Fig. 4B. In addition to the features described below, the apparatus embodiment includes the same or corresponding features or effects as the method embodiment shown in Fig. 4A. The apparatus may be specifically applied to various electronic devices.

The apparatus for training a deep neural network of the present embodiment includes: a sample acquisition unit, an input unit and a training unit. The sample acquisition unit is configured to acquire a training sample, a voice sample in the training sample including a sub-voice in at least one preset direction interval. The input unit is configured to input the voice sample into the deep neural network to obtain a prediction result, the deep neural network being used to predict whether the voice has a sub-voice in each of a plurality of direction intervals. The training unit is configured to train the deep neural network based on the prediction result, to obtain a trained deep neural network.

In the present embodiment, for the specific processing and technical effects thereof of the sample acquisition unit, the input unit and the training unit in the apparatus for training a deep neural network, reference may be made to the relevant descriptions of step 401, step 402 and step 403 in the corresponding embodiment of Fig. 4A respectively, and repeated description thereof will be omitted.

In the present apparatus embodiment, the deep neural network includes a multi-head fully connected network, and an output of the multi-head fully connected network is used to represent whether the voice has a sub-voice in each of the plurality of direction intervals respectively, where direction intervals corresponding to any two fully connected networks in the multi-head fully connected network are different.

In the present apparatus embodiment, the input unit is further configured to input the voice sample into the deep neural network to obtain the prediction result by: inputting the voice sample into the deep neural network, determining a feature of the voice sample using the deep neural network to obtain a to-be-processed voice feature, where the training sample further includes direction information of each sub-voice in the voice sample, and the to-be-processed voice feature includes a to-be-processed sub-voice feature corresponding to each sub-voice in the voice sample; for each to-be-processed sub-voice feature of the sub-voice, determining, in the multi-head fully connected network, a fully connected network corresponding to a direction interval in which a direction indicated by the direction information of the sub-voice is located, and using the fully connected network as a fully connected network into which the to-be-processed sub-voice feature is to-be-input; and determining whether the voice sample has the sub-voice in each of the plurality of direction of arrival intervals using the multi-head fully connected network.

In the present apparatus embodiment, a training network structure of the deep neural network further includes a feature-oriented network. The input unit is further configured determine, for each to-be-processed sub-voice feature of the sub-voice, in the multi-head fully connected network, a fully connected network corresponding to a direction in which the direction indicated by the direction information of the sub-voice is located, and use the fully connected network as the fully connected network into which the to-be-processed sub-voice feature is to-be-input by: for each to-be-processed sub-voice feature of the sub-voice, determining, using the feature-oriented network, in the multi-head fully connected network the fully connected network corresponding to the direction interval in which the direction indicated by the direction information of the sub-voice is located, and using the fully connected network as the fully connected network into which the to-be-processed sub-voice feature is to-be-input.

In the present embodiment, the input unit is further configured to determine whether the voice sample has the sub-voice in each of the plurality of direction intervals using the multi-head fully connected network by: for each to-be-processed sub-voice feature, using the to-be-processed sub-voice feature for forward propagation on the corresponding fully connected network to obtain a probability that the voice sample has the sub-voice in each of the plurality of direction intervals.

In some optional implementations of the present embodiment, the deep neural network further includes a feature-extraction network and a convolutional neural network. The input unit is further configured to determine a feature of the voice sample using the deep neural network to obtain a to-be-processed voice feature by: extracting a voice feature of the voice sample based on the feature-extraction network; and processing the extracted voice feature using the convolutional neural network to obtain the to-be-processed voice feature to be input into the multi-head fully connected network.

In the present apparatus embodiment, the deep neural network further includes a Fourier transform network; the input unit is further configured to extract the voice feature of the voice sample based on the feature-extraction network by: performing Fourier transform on the voice sample using the Fourier transform network to obtain a plural form vector (i.e. a complex vector) represented by a real part and an imaginary part; normalizing the real part and the imaginary part of the vector using the feature-extraction network to obtain a normalized real part and a normalized imaginary part; and using the normalized real part and the normalized imaginary part as the voice feature of the voice sample.

In some optional implementations of the present apparatus embodiment, the training unit is further configured to train the deep neural network based on the prediction result, to obtain the trained deep neural network by: performing back propagation in the training network structure based on the obtained probability, to update a parameter of the convolutional neural network and a parameter of the multi-head fully connected network.

In some optional implementations of the present apparatus embodiment, the training unit is further configured to perform the performing back propagation in the training network structure based on the obtained probability, to update the parameter of the convolutional neural network and the parameter of the multi-head fully connected network by: for each obtained probability, determining a loss value corresponding to the probability, and performing back propagation in the fully connected network that obtains the probability using the loss value, to obtain a first result corresponding to the probability; merging the obtained first results using the feature-oriented network to obtain a first result set; and performing back propagation in the convolutional neural networks using the first result set to update the parameter of the convolutional neural networks and the parameter of the multi-head fully connected network.

According to an embodiment of the present disclosure, the present disclosure further provides an electronic device and a readable storage medium.

As shown in Fig. 6, is a block diagram of an electronic device of the method for detecting a voice according to an embodiment of the present disclosure, and is also a block diagram of an electronic device of the method for training a deep neural network. The block diagram of the electronic device of the method for detecting a voice is used as an example for the description as follows.

The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processing, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 6, the electronic device includes: one or more processors 601, a memory 602, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories if desired. Similarly, a plurality of electronic devices may be connected, and the devices provide some necessary operations (for example, as a server array, a set of blade servers, or a multiprocessor system). In Fig. 6, one processor 601 is used as an example.

The memory 602 is a non-transitory computer readable storage medium provided by the present disclosure. The memory stores instructions executable by at least one processor, so that the at least one processor performs the method for detecting a voice provided by the present disclosure. The non-transitory computer readable storage medium of the present disclosure stores computer instructions for causing a computer to perform the method for detecting a voice provided by the present disclosure.

The memory 602, as a non-transitory computer readable storage medium, may be used to store non-transitory software programs, non-transitory computer executable programs and modules, such as program instructions/modules corresponding to the method for detecting a voice in the embodiments of the present disclosure (for example, the acquisition unit 501 and the prediction unit 502 as shown in Fig. 5). The processor 601 executes the non-transitory software programs, instructions, and modules stored in the memory 602 to execute various functional applications and data processing of the server, that is, to implement the method for detecting a voice in the method embodiments.

The memory 602 may include a storage program area and a storage data area, where the storage program area may store an operating system and at least one function required application program; and the storage data area may store data created by use of the electronic device for detecting a voice. In addition, the memory 602 may include a high-speed random access memory, and may also include a non-transitory memory, such as at least one magnetic disk storage device, a flash memory device, or other non-transitory solid-state storage devices. In some embodiments, the memory 602 may optionally include memories remotely provided with respect to the processor 601, and these remote memories may be connected to the electronic device for detecting a voice through a network. Examples of the above network include but are not limited to the Internet, intranet, local area network, mobile communication network, and combinations thereof.

The electronic device of the method for for detecting a voice may further include: an input apparatus 603 and an output apparatus 604. The processor 601, the memory 602, the input apparatus 603, and the output apparatus 604 may be connected through a bus or in other methods. In Fig. 6, connection through a bus is used as an example.

The input apparatus 603 may receive input digital or character information, and generate key signal inputs related to user settings and function control of the electronic device of the method for detecting a voice, such as touch screen, keypad, mouse, trackpad, touchpad, pointing stick, one or more mouse buttons, trackball, joystick and other input apparatuses. The output apparatus 604 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), the Internet, and blockchain networks.

The computer system may include a client and a server. The client and the server are generally far from each other and usually interact through the communication network. The relationship between the client and the server is generated by computer programs that run on the corresponding computer and have a client-server relationship with each other. The server may be a cloud server, also known as a cloud computing server or a cloud host, which is a host product in the cloud computing service system to solve the shortcomings of difficult management and weak business scalability among the traditional physical host and VPS service ("Virtual Private Server", or "VPS" for short).

Flowcharts and block diagrams in the drawings illustrate architectures, functions, and operations of possible implementations of systems, methods, and computer program products in accordance with various embodiments of the present disclosure. In this regard, each block in a flowchart or block diagram may represent a module, program segment, or portion of code that contains one or more executable instructions for implementing a specified logical function. It should also be noted that in some alternative implementations, the functions noted in the blocks may also occur in an order different from that noted in the drawings. For example, two successively represented blocks may actually be executed substantially in parallel, and they may sometimes be executed in the reverse order, depending on the functionality involved. It is also noted that each block of the block diagrams and/or flowcharts, and combinations of blocks in the block diagrams and/or flowcharts, may be implemented with a dedicated hardware-based system that performs the specified functions or operations, or may be implemented with a combination of dedicated hardware and computer instructions.

The units involved in the embodiments of the present disclosure may be implemented by means of software or hardware. The described units may also be provided in a processor, for example, may be described as: a processor, including an acquisition unit and a prediction unit. Here, the names of these units do not in some cases constitute limitations to such units themselves. For example, the acquisition unit may also be described as "a unit configured to acquire a target voice."

In another aspect, the present disclosure further provides a computer readable medium. The computer readable medium may be included in the apparatus in the above described embodiments, or a stand-alone computer readable medium not assembled into the apparatus. The computer readable medium stores one or more programs. The one or more programs, when executed by the apparatus, cause the apparatus to: acquire a target voice; and input the target voice into a pre-trained deep neural network to obtain whether the target voice has a sub-voice in each of a plurality of preset direction intervals, the deep neural network being used to predict whether the voice has a sub-voice in each of the plurality of direction intervals.

In another aspect, an embodiment of the present disclosure further provides a computer readable medium. The computer readable medium may be included in the apparatus in the above described embodiments, or a stand-alone computer readable medium not assembled into the apparatus. The computer readable medium stores one or more programs. The one or more programs, when executed by the apparatus, cause the apparatus to: acquire a training sample, a voice sample in the training sample including a sub-voice in at least one preset direction interval; input the voice sample into the deep neural network to obtain a prediction result, the deep neural network being used to predict whether the voice has a sub-voice in each of a plurality of direction intervals; and train the deep neural network based on the prediction result, to obtain a trained deep neural network.

The above description is only a preferred embodiment of the disclosure and a description of the technical principles employed. It should be understood by those skilled in the art that the scope of the disclosure referred to in this disclosure is not limited to the technical solutions formed by specific combinations of the above-mentioned technical features, but also covers other technical solutions falling within the scope of protection defined by the appended claims.

## Claims

1. A method for detecting a voice, the method comprising:

   acquiring a target voice (201); and
   inputting (202) the target voice into a pre-trained deep neural network to obtain whether the target voice has a sub-voice in each of a plurality of preset direction intervals, the deep neural network being used to predict whether the voice has a sub-voice in each of the plurality of direction intervals, wherein the target voice is a voice emitted by at least one sound source, each sound source emits one sub-voice in the target voice, and each sound source corresponds to one direction of arrival;
   wherein the deep neural network comprises a multi-head fully connected network, and an output of the multi-head fully connected network is used to represent whether the voice has the sub-voice in each of the plurality of direction intervals respectively, wherein direction intervals corresponding to any two fully connected networks in the multi-head fully connected network are different;
   wherein the deep neural network further comprises a feature-extraction network and a convolutional neural network;
   the inputting the target voice into a pre-trained deep neural network to obtain whether the target voice has a sub-voice in each of a plurality of preset direction intervals, comprises:

      inputting the target voice into the pre-trained deep neural network, and extracting a voice feature of the target voice based on the feature-extraction network; and
      processing the voice feature using the convolutional neural network to obtain a voice feature after convolution to be input into the multi-head fully connected network;

   wherein the deep neural network further comprises a Fourier transform network;

the method being **characterised in that**:

the extracting a voice feature of the target voice based on the feature-extraction network, comprises:

performing Fourier transform on the target voice using the Fourier transform network to obtain a plural form vector, which is represented by a real part and an imaginary part;

normalizing the real part and the imaginary part of the vector using the feature-extraction network to obtain a normalized real part and a normalized imaginary part; and

using the normalized real part and the normalized imaginary part as the voice feature of the target voice.

2. The method according to claim 1, wherein the method further comprises:

determining a logarithm of a modulus length of the vector using the feature-extraction network; and

the using the normalized real part and the normalized imaginary part as the voice feature of the target voice, comprises:

using the normalized real part, the normalized imaginary part and the logarithm as the voice feature of the target voice.

3. The method according to claim 1, wherein the inputting the target voice into a pre-trained deep neural network to obtain whether the target voice has a sub-voice in each of a plurality of preset direction intervals, further comprises:

for each fully connected network in the multi-head fully connected network, inputting the voice feature after convolution into the fully connected network to obtain a probability that the target voice has a sub-voice in a direction interval corresponding to the fully connected network.

4. The method according to claim 3, wherein the deep neural network further comprises a concate layer;

the inputting the target voice into a pre-trained deep neural network to obtain whether the target voice has a sub-voice in each of a plurality of preset direction intervals, further comprises:

merging probabilities corresponding to the multi-head fully connected network to obtain a to-be-output probability set.

5. The method according to claim 1, wherein a fully connected network in the multi-head fully connected network comprises a fully connected layer, an affine layer and a softmax layer.

6. A method for training a deep neural network, the method comprising:

acquiring (401) a training sample, wherein a voice sample in the training sample comprises a sub-voice in at least one preset direction interval, wherein the sub-voice is emitted by one sound source corresponding to one direction of arrival;

inputting (402) the voice sample into the deep neural network to obtain a prediction result, the deep neural network being used to predict whether the voice has a sub-voice in each of a plurality of direction intervals; and

training (403) the deep neural network based on the prediction result, to obtain a trained deep neural network;

wherein the deep neural network comprises a multi-head fully connected network, and an output of the multi-head fully connected network is used to represent whether a voice has a sub-voice in each of the plurality of direction intervals respectively, wherein direction intervals corresponding to any two fully connected networks in the multi-head fully connected network are different;

wherein the inputting the voice sample into the deep neural network to obtain a prediction result, comprises:

inputting the voice sample into the deep neural network, determining a feature of the voice sample using the deep neural network to obtain a to-be-processed voice feature, wherein the training sample further comprises direction information of each sub-voice in the voice sample, and the to-be-processed voice feature comprises a to-be-processed sub-voice feature corresponding to each sub-voice in the voice sample;

for each to-be-processed sub-voice feature of the sub-voice, determining in the multi-head fully connected network a fully connected network corresponding to a direction interval in which a direction indicated by the direction information of the sub-voice is located, and using the fully connected network as a fully connected network into which the to-be-processed sub-voice feature is to-be-input; and

determining whether the voice sample has the sub-voice in each of the plurality of direction intervals using the multi-head fully connected network;

wherein the deep neural network further comprises a feature-extraction network and a convolutional neural network:

the determining a feature of the voice sample using the deep neural network to obtain a to-be-processed voice feature, comprises:

extracting a voice feature of the voice sample based on the feature-extraction network; and

processing the extracted voice feature using the convolutional neural network to obtain the to-be-processed voice feature to be input into the multi-head fully connected network;

wherein the deep neural network further comprises a Fourier transform network;
the method being **characterised in that**:
the extracting a voice feature of the voice sample based on the feature-extraction network, comprises:

performing Fourier transform on the voice sample using the Fourier transform network to obtain a plural form vector which is represented by a real part and an imaginary part;

normalizing a real part and an imaginary part of the vector using the feature-extraction network to obtain a normalized real part and a normalized imaginary part; and using the normalized real part and the normalized imaginary part as the voice feature of the voice sample.

7. The method according to claim 6, wherein a training network structure of the deep neural network further comprises a feature-oriented network;
the for each to-be-processed sub-voice feature of the sub-voice, determining in the multi-head fully connected network a fully connected network corresponding to a direction interval in which a direction indicated by the direction information of the sub-voice is located, and using the fully connected network as a fully connected network into which the to-be-processed sub-voice feature is to-be-input, comprises:
for each to-be-processed sub-voice feature of the sub-voice, determining, using the feature-oriented network, in the multi-head fully connected network the fully connected network corresponding to the direction interval in which the direction indicated by the direction information of the sub-voice is located, and using the fully connected network as the fully connected network into which the to-be-processed sub-voice feature is to-be-input.

8. The method according to claim 6, wherein the determining whether the voice sample has a sub-voice in each of the plurality of direction intervals using the multi-head fully connected network, comprises:
for each to-be-processed sub-voice feature, using the to-be-processed sub-voice feature for forward propagation on the corresponding fully connected network to obtain a probability that the voice sample has the sub-voice in each of the plurality of direction intervals.

9. The method according to claim 6, wherein the training the deep neural network based on the prediction result, to obtain a trained deep neural network, comprises:
performing back propagation in the training network structure based on the obtained probability, to update a parameter of the convolutional neural network and a parameter of the multi-head fully connected network.

10. The method according to claim 9, wherein the performing back propagation in the training network structure based on the obtained probability, to update a parameter of the convolutional neural network and a parameter of the multi-head fully connected network, comprises:

for each obtained probability, determining a loss value corresponding to the probability, and performing back propagation in the fully connected network that obtains the probability using the loss value, to obtain a first result corresponding to the probability;
merging the obtained first results using the feature-oriented network to obtain a first result set; and
performing back propagation in the convolutional neural network using the first result set to update the parameter of the convolutional neural network and the parameter of the multi-head fully connected network.

11. An apparatus for detecting a voice, wherein the apparatus comprises units for performing the method according to any one of claims 1-5 or any one of claims 6-10.

12. An electronic device, comprising:

one or more processors (601); and
a storage apparatus (602) storing one or more programs,
wherein the one or more programs, when executed by the one or more processors, cause the one or more processors to implement the method according to any one of claims 1-5 or any one of claims 6-10.

13. A computer readable storage medium, storing a computer program thereon, wherein the program, when executed by a processor, implements the method according to any one of claims 1-5 or any one of claims 6-10.

**Patentansprüche**

1. Verfahren zum Detektieren einer Stimme, wobei bei dem Verfahren:

eine Zielstimme erfasst wird (201) und die Zielstimme in ein vortrainiertes tiefes neuronales Netzwerk eingegeben wird (202), um festzustellen, ob die Zielstimme eine Unter-Stimme in jedem aus einer Mehrzahl von vorbestimmten Richtungsintervallen aufweist, wobei das tiefe neuronale Netzwerk dazu verwendet wird, um vorherzusagen, ob die Stimme eine Unter-Stimme in jedem aus der Mehrzahl von Richtungsintervallen hat, wobei die Zielstimme eine Stimme ist, die von wenigstens einer Schallquelle ausgegeben wird, wobei jede Schallquelle eine Unter-Stimme in der Zielstimme ausgibt und jede Schallquelle einer Einfallsrichtung entspricht, wobei das tiefe neuronale Netzwerk ein Multi-Head Fully-Connected Netzwerk ist und wobei eine Ausgabe des Multi-Head Fully-Connected Netzwerks dazu verwendet wird, um anzuzeigen, ob die Stimme jeweils in jedem aus der Mehrzahl von Richtungsintervallen die Unter-Stimme enthält, wobei Richtungsintervalle, die jeglichen zwei Fully-Connected Netzwerken in dem Multi-Head Fully-Connected Netzwerk entsprechen, voneinander verschieden sind, wobei das tiefe neuronale Netzwerk ferner ein Merkmal-Extraktions-Netzwerk und ein konvolutionales neuronales Netzwerk aufweist, wobei das Eingeben der Zielstimme in ein vortrainiertes tiefes neuronales Netzwerk zur Feststellung, ob die Zielstimme eine Unter-Stimme in jedem aus einer Mehrzahl von vorbestimmten Richtungsintervallen hat, beinhaltet, die Zielstimme in das vortrainierte tiefe neuronale Netzwerk einzugeben und ein Stimmenmerkmal der Zielstimme basierend auf dem Merkmal-Extraktions-Netzwerk zu extrahieren und das Stimmenmerkmal unter Verwendung des konvolutionalen neuronalen Netzwerks zu prozessieren, um nach Konvolution ein Stimmenmerkmal zu erhalten, das in das Multi-Head Fully-Connected Netzwerk einzugeben ist, wobei das tiefe neuronale Netzwerk weiter ein Fourier-Transformations-Netzwerk aufweist, wobei das Verfahren **dadurch gekennzeichnet ist, dass**: die Extraktion eines Stimmenmerkmals aus der Zielstimme basierend auf dem Merkmals-Extraktions-Netzwerks beinhaltet, unter Verwendung des Fourier-Transformations-Netzwerks eine Fourier-Transformation auf die Zielstimme anzuwenden, um einen mehrwertigen Vektor zu erhalten, der durch einen Realteil und einen Imaginärteil repräsentiert wird, den Realteil und den Imaginärteil des Vektors unter Verwendung des Merkmal-Extraktions-Netzwerks zu normalisieren, um einen normalisierten Realteil und einen normalisierten Imaginärteil zu erhalten, und den normalisierten Realteil und den normalisierten Imaginärteil als das Stimmenmerkmal der Zielstimme zu verwenden.

2. Verfahren nach Anspruch 1, wobei das Verfahren weiter beinhaltet,

unter Verwendung des Merkmal-Extraktions-Netzwerks den Logarithmus einer Betragslänge des Vektors zu bestimmen, und wobei die Verwendung des normalisierten Realteils und des normalisierten Imaginärteils als das Stimmenmerkmal der Zielstimme beinhaltet, den normalisierten Realteil, den normalisierten Imaginärteil und den Logarithmus als das Stimmenmerkmal der Zielstimme zu verwenden.

3. Verfahren nach Anspruch 1, wobei das Eingeben der Zielstimme in ein vortrainiertes tiefes neuronales Netzwerk zur Feststellung, ob die Zielstimme eine Unter-Stimme in jedem aus einer Mehrzahl von vorbestimmten Richtungsintervallen hat, weiter beinhaltet, für jedes Fully-Connected Netzwerk in dem Multi-Head Fully-Connected Netzwerk das Stimmenmerkmal nach Konvolution in das Fully-Connected Netzwerk einzugeben, um eine Wahrscheinlichkeit zu erhalten, dass die Zielstimme eine Unter-Stimme in einem dem Fully-Connected Netzwerk entsprechenden Richtungsintervall hat.

4. Verfahren nach Anspruch 3, wobei das tiefe neuronale Netzwerk eine Verkettungsschicht aufweist,

wobei das Eingeben der Zielstimme in ein vortrainiertes tiefes neuronales Netzwerk zur Feststellung, ob die Zielstimme in jedem aus einer Mehrzahl von vorbestimmten Richtungsintervallen eine Unter-Stimme hat, weiter beinhaltet, Wahrscheinlichkeiten entsprechend dem Multi-Head Fully-Connected Netzwerk zusammenzuführen, um einen auszugebenden Wahrscheinlichkeitssatz zu erhalten.

5. Verfahren nach Anspruch 1, wobei ein Fully-Connected-Netzwerk in dem Multi-Head Fully-Connected Netzwerk eine Fully-Connected Schicht, eine affine Schicht und eine Softmax-Schicht aufweist.

**6.** Verfahren zum Trainieren eines tiefen neuronalen Netzwerks, wobei bei dem Verfahren:

eine Trainingsprobe erfasst wird (401), wobei eine Stimmprobe in der Trainingsprobe eine Unter-Stimme in wenigstens einem vorbestimmten Richtungsintervall aufweist, wobei die Unter-Stimme von einer Schallquelle entsprechend einer Einfallsrichtung ausgegeben wird,

die Stimmprobe in das tiefe neuronale Netzwerk eingegeben wird (402), um ein Vorhersageresultat zu erhalten, wobei das tiefe neuronale Netzwerk dazu verwendet wird, um vorherzusagen, ob die Stimme eine Unter-Stimme in jedem aus einer Mehrzahl von Richtungsintervallen hat, und

das tiefe neuronale Netzwerk basierend auf dem Vorhersageresultat trainiert wird (403), um ein trainiertes tiefes neuronales Netzwerk zu erhalten,

wobei das tiefe neuronale Netzwerk ein Multi-Head Fully-Connected Netzwerk aufweist und eine Ausgabe des Multi-Head Fully-Connected Netzwerks zur Anzeige verwendet wird, ob eine Stimme eine Unter-Stimme jeweils in jedem aus einer Mehrzahl von Richtungsintervallen hat, wobei Richtungsintervalle entsprechend irgendwelchen zwei fully-connected-Netzwerken in dem Multi-Head Fully-Connected Netzwerk voneinander verschieden sind,

wobei das Eingeben der Stimmprobe in das tiefe neuronale Netzwerk zur Erhaltung eines Vorhersageresultats beinhaltet,

die Stimmprobe in das tiefe neuronale Netzwerk einzugeben, ein Merkmal der Stimmprobe unter Verwendung des tiefen neuronalen Netzwerks zu bestimmen, um ein zu prozessierendes Stimmenmerkmal zu erhalten, wobei die Trainingsprobe weiter Richtungsinformation für jede Unter-Stimme in der Stimmprobe enthält und wobei das zu prozessierende Stimmenmerkmal ein zu prozessierendes Unter-Stimmenmerkmal entsprechend jeder Unter-Stimme in der Stimmprobe enthält,

für jedes zu prozessierende Unter-Stimmenmerkmal der Unter-Stimme in dem Multi-Head Fully-Connected Netzwerk ein Fully-Connected Netzwerk entsprechend einem Richtungsintervall zu bestimmen, in dem sich eine durch die Richtungsinformation angezeigte Richtung der Unter-Stimme befindet, und das Fully-Connected Netzwerk als ein Fully-Connected Netzwerk zu verwenden, in das das zu prozessierende Unter-Stimmenmerkmal einzugeben ist, und unter Verwendung des Multi-Head Fully-Connected Netzwerks festzustellen, ob die Stimmprobe eine Unter-Stimme in jedem aus der Mehrzahl von Richtungsintervallen hat,

wobei das tiefe neuronale Netzwerk ferner ein Merkmal-Extraktions-Netzwerk und konvolutionales neuronales Netzwerk aufweist,

wobei das Bestimmen eines Merkmals der Stimmprobe unter Verwendung des tiefen neuronalen Netzwerks, um ein zu prozessierende Stimmenmerkmal zu erhalten, beinhaltet,

ein Stimmenmerkmal der Stimmprobe basierend auf dem Merkmal-Extraktions-Netzwerk zu extrahieren und

das extrahierte Stimmenmerkmal unter Verwendung des konvolutionalen neuronalen Netzwerks zu prozessieren, um das zu prozessierende Stimmenmerkmal zu erhalten, das in das Multi-Head Fully-Connected Netzwerk einzugeben ist,

wobei das tiefe neuronale Netzwerk ferner ein Fourier-Transformations-Netzwerk aufweist,

wobei das Verfahren **dadurch gekennzeichnet ist, dass**

das Extrahieren eines Stimmenmerkmals aus der Stimmprobe basierend auf dem Merkmal-Extraktions-Netzwerk beinhaltet,

eine Fourier-Transformation auf die Stimmprobe unter Verwendung des Fourier-Transformations-Netzwerks anzuwenden, um einen mehrwertigen Vektor zu erhalten, der durch einen Realteil und einen Imaginärteil repräsentiert wird,

einen Realteil und einen Imaginärteil des Vektors unter Verwendung des Merkmal-Extraktions-Netzwerks zu normalisieren, um einen normalisierten Realteil und einen normalisierten Imaginärteil zu erhalten, und

den normalisierten Realteil und den normalisierten Imaginärteil als das Stimmenmerkmal der Stimmenprobe zu verwenden.

**7.** Verfahren nach Anspruch 6, wobei eine Trainingsnetzwerkstruktur des tiefen neuronalen Netzwerks ferner ein merkmalorientiertes Netzwerk aufweist,

wobei für jedes zu prozessierende Unter-Stimmenmerkmal der Unter-Stimme das Bestimmen eines Fully-Connected Netzwerks in dem Multi-Head Fully-Connected Netzwerk entsprechend einem Richtungsintervall, in dem sich eine durch die Richtungsinformation der Unter-Stimme angegebene Richtung befindet, und das Verwenden des Fully-Connected Netzwerks als ein Fully-Connected Netzwerk, in das das zu prozessierende Unter-Stimmenmerkmal einzugeben ist, beinhaltet,

für jedes zu prozessierende Unter-Stimmenmerkmal der Unter-Stimme, unter Verwendung des merkmalsorientierten Netzwerks, in dem Multi-Head Fully-Connected Netzwerk das Fully-Connected Netzwerk zu bestimmen, das dem Richtungsintervall entspricht, in dem sich die durch die Richtungsinformation der Unter-Stimme angegebene Richtung befindet, und das Fully-Connected Netzwerk als das Fully-Connected Netzwerks zu verwenden, in das das prozessierende Unter-Stimmenmerkmal einzugeben ist.

8. Verfahren nach Anspruch 6, wobei das Feststellen, ob die Stimmenprobe eine Unter-Stimme in jedem aus einer Mehrzahl von Richtungsintervallen unter Verwendung des Multi-Head Fully-Connected Netzwerks beinhaltet,
für jedes prozessierende Unter-Stimmenmerkmal das zu prozessierende Unter-Stimmenmerkmal zur Vorwärtspropagation auf dem entsprechenden Fully-Connected Netzwerk zu verwenden, um eine Wahrscheinlichkeit zu erhalten, dass die Stimmenprobe die Unter-Stimme in jedem aus der Mehrzahl von Richtungsintervallen hat.

9. Verfahren nach Anspruch 6, wobei das Trainieren des tiefen neuronalen Netzwerks basierend auf dem Vorhersageresultat, um ein trainiertes tiefes neuronales Netzwerk zu erhalten, beinhaltet,
eine Rückwärtspropagation in der Trainingsnetzwerkstruktur basierend auf der erhaltenen Wahrscheinlichkeit durchzuführen, um einen Parameter des konvolutionalen neuronalen Netzwerks und einen Parameter des Multi-Head Fully-Connected Netzwerks zu aktualisieren.

10. Verfahren nach Anspruch 9, wobei die Durchführung der Rückwärtspropagation in der Trainingsnetzwerkstruktur basierend auf der erhaltenen Wahrscheinlichkeit zur Aktualisierung eines Parameters des konvolutionalen neuronalen Netzwerks und eines Parameters des Multi-Head Fully-Connected Netzwerks beinhaltet,

für jede erhaltene Wahrscheinlichkeit einen Verlustwert entsprechend der Wahrscheinlichkeit zu bestimmen und eine Rückwärtspropagation in dem Fully-Connected Netzwerk durchzuführen, die unter Verwendung des Verlustwertes die Wahrscheinlichkeit erhält, um ein erstes Resultat entsprechend der Wahrscheinlichkeit zu erhalten,
die erhaltenen ersten Resultate unter Verwendung des merkmalsorientierten Netzwerks zusammenzuführen, um einen ersten Resultatsatz zu erhalten, und
eine Rückwärtspropagation in dem konvolutionalen neuronalen Netzwerk unter Verwendung des ersten Resultatsatzes durchzuführen, um den Parameter des konvolutionalen neuronalen Netzwerks und den Parameter des Multi-Head Fully-Connected Netzwerks zu aktualisieren.

11. Vorrichtung zum Erfassen einer Stimme, wobei die Vorrichtung Einheiten zum Durchführen des Verfahrens nach einem der Ansprüche 1-5 oder einem der Ansprüche 6-10 aufweist.

12. Elektronische Vorrichtung mit:

einem oder mehrere Prozessoren (601) und eine Speichervorrichtung (602), die ein oder mehrere Programme speichert,
wobei das eine oder die mehreren Programme, wenn sie durch den einen oder die mehreren Prozessoren ausgeführt werden, den einen oder die mehreren Prozessoren dazu veranlassen, das Verfahren nach einem der Ansprüche 1-5 oder einem der Ansprüche 6-10 durchzuführen.

13. Computer-lesbares Speichermedium, in dem ein Computer-Programm gespeichert ist, wobei das Programm, wenn es durch einen Prozessor ausgeführt wird, das Verfahren nach einem der Ansprüche 1-5 oder einem der Ansprüche 6-10 ausführt.

**Revendications**

1. Procédé de détection d'une voix, le procédé comprenant :

l'acquisition d'une voix cible (201) ; et
l'entrée (202) de la voix cible dans un réseau neuronal profond pré-entraîné pour obtenir si la voix cible comporte ou non une sous-voix dans chacun d'une pluralité d'intervalles de direction prédéfinis, le réseau neuronal profond étant utilisé pour prédire si la voix comporte ou non une sous-voix dans chacun de la pluralité d'intervalles de direction, dans lequel la voix cible est une voix émise par au moins une source sonore, chaque source sonore émet une sous-voix dans la voix cible, et chaque source sonore correspond à une direction d'arrivée ;
dans lequel le réseau neuronal profond comprend un réseau entièrement connecté multi-têtes et une sortie du réseau entièrement connecté multi-têtes est utilisée pour représenter si la voix comporte ou non la sous-voix respectivement dans chacun de la pluralité d'intervalles de direction, dans lequel des intervalles de direction correspondant à deux réseaux entièrement connectés quelconques dans le réseau entièrement connecté multi-têtes sont différents ;
dans lequel le réseau neuronal profond comprend en outre un réseau d'extraction de caractéristique et un réseau neuronal convolutif ;
l'entrée de la voix cible dans un réseau neuronal profond pré-entraîné pour obtenir si la voix cible comporte ou non une sous-voix dans chacun de la pluralité d'intervalles de direction prédéfinis comprend :

l'entrée de la voix cible dans le réseau neuronal profond pré-entraîné et l'extraction d'une caractéristique de voix de la voix cible sur la base du réseau d'extraction de caractéristique ; et
le traitement de la caractéristique de voix en utilisant le réseau neuronal convolutif pour obtenir une caractéristique de voix après convolution à entrer dans le réseau entièrement connecté multi-têtes ;

dans lequel le réseau neuronal profond comprend en outre un réseau de transformée de Fourier ;
le procédé étant **caractérisé en ce que** :
l'extraction d'une caractéristique de voix de la voix cible sur la base du réseau d'extraction de caractéristique comprend :

la réalisation d'une transformée de Fourier sur la voix cible en utilisant le réseau de transformée de Fourier pour obtenir un vecteur de forme plurielle, qui est représenté par une partie réelle et une partie imaginaire ;
la normalisation de la partie réelle et de la partie imaginaire du vecteur en utilisant le réseau d'extraction de caractéristique pour obtenir une partie réelle normalisée et une partie imaginaire normalisée ; et
l'utilisation de la partie réelle normalisée et de la partie imaginaire normalisée en tant que la caractéristique de voix de la voix cible.

2. Procédé selon la revendication 1, dans lequel le procédé comprend en outre :

la détermination d'un logarithme d'une longueur de module du vecteur en utilisant le réseau d'extraction de caractéristique ; et
l'utilisation de la partie réelle normalisée et de la partie imaginaire normalisée en tant que la caractéristique de voix de la voix cible comprend :
l'utilisation de la partie réelle normalisée, de la partie imaginaire normalisée et du logarithme en tant que la caractéristique de voix de la voix cible.

3. Procédé selon la revendication 1, dans lequel l'entrée de la voix cible dans un réseau neuronal profond pré-entraîné pour obtenir si la voix cible comporte ou non une sous-voix dans chacun d'une pluralité d'intervalles de direction prédéfinis comprend en outre :

pour chaque réseau entièrement connecté dans le réseau entièrement connecté multi-têtes, l'entrée de la caractéristique de voix après convolution dans le réseau entièrement connecté pour obtenir une probabilité que la voix cible comporte une sous-voix dans un intervalle de direction correspondant au réseau entièrement connecté.

4. Procédé selon la revendication 3, dans lequel le réseau neuronal profond comprend en outre une couche de concaténation ;
l'entrée de la voix cible dans un réseau neuronal profond pré-entraîné pour obtenir si la voix cible comporte ou non une sous-voix dans chacun d'une pluralité d'intervalles de direction prédéfinis comprend en outre :
la fusion de probabilités correspondant au réseau entièrement connecté multi-têtes pour obtenir un ensemble de probabilités à délivrer.

5. Procédé selon la revendication 1, dans lequel un réseau entièrement connecté dans le réseau entièrement connecté multi-têtes comprend une couche entièrement connectée, une couche affine et une couche softmax.

6. Procédé d'entraînement d'un réseau neuronal profond, le procédé comprenant :

l'acquisition (401) d'un échantillon d'entraînement, dans lequel un échantillon de voix dans l'échantillon d'entraînement comprend une sous-voix dans au moins un intervalle de direction prédéfini, dans lequel la sous-voix est émise par une source sonore correspondant à une direction d'arrivée ;
l'entrée (402) de l'échantillon de voix dans le réseau neuronal profond pour obtenir un résultat de prédiction, le réseau neuronal profond étant utilisé pour prédire si la voix comporte ou non une sous-voix dans chacun d'une pluralité d'intervalles de direction ; et
l'entraînement (403) du réseau neuronal profond sur la base du résultat de prédiction, pour obtenir un réseau neuronal profond entraîné ;
dans lequel le réseau neuronal profond comprend un réseau entièrement connecté multi-têtes et une sortie du réseau entièrement connecté multi-têtes est utilisée pour représenter si une voix comporte ou non une sous-voix respectivement dans chacun de la pluralité d'intervalles de direction, dans lequel des intervalles de direction correspondant à deux réseaux entièrement connectés quelconques dans le réseau entièrement connecté multi-têtes sont différents ; dans lequel l'entrée de l'échantillon de voix dans le réseau neuronal profond pour obtenir un résultat de prédiction comprend :

l'entrée de l'échantillon de voix dans le réseau neuronal profond, la détermination d'une caractéristique de l'échantillon de voix en utilisant le réseau neuronal profond pour obtenir une caractéristique de voix à traiter, dans lequel l'échantillon d'entraînement comprend en outre des informations de direction de chaque sous-voix dans l'échantillon de voix, et la caractéristique de voix à traiter comprend une caractéristique de sous-voix à traiter correspondant à chaque sous-voix dans l'échantillon de voix ; pour chaque caractéristique de sous-voix à traiter de la sous-voix, la détermination, dans le réseau entièrement connecté multi-têtes, d'un réseau entièrement connecté correspondant à un intervalle de direction dans lequel une direction indiquée par les informations de direction de la sous-voix est située, et l'utilisation du réseau entièrement connecté en tant qu'un réseau entièrement connecté dans lequel la caractéristique de sous-voix à traiter doit être entrée ; et la détermination si l'échantillon de voix comporte ou non la sous-voix dans chacun de la pluralité d'intervalles de direction en utilisant le réseau entièrement connecté multi-têtes ;

dans lequel le réseau neuronal profond comprend en outre un réseau d'extraction de caractéristique et un réseau neuronal convolutif ; la détermination d'une caractéristique de l'échantillon de voix en utilisant le réseau neuronal profond pour obtenir une caractéristique de voix à traiter comprend :

l'extraction d'une caractéristique de voix de l'échantillon de voix sur la base du réseau d'extraction de caractéristique ; et le traitement de la caractéristique de voix extraite en utilisant le réseau neuronal convolutif pour obtenir la caractéristique de voix à traiter qui doit être entrée dans le réseau entièrement connecté multi-têtes ;

dans lequel le réseau neuronal profond comprend en outre un réseau de transformée de Fourier ; le procédé étant **caractérisé en ce que** :

l'extraction d'une caractéristique de voix de l'échantillon de voix sur la base du réseau d'extraction de caractéristique comprend :

la réalisation d'une transformée de Fourier sur l'échantillon de voix en utilisant le réseau de transformée de Fourier pour obtenir un vecteur de forme plurielle qui est représenté par une partie réelle et une partie imaginaire ; la normalisation d'une partie réelle et d'une partie imaginaire du vecteur en utilisant le réseau d'extraction de caractéristique pour obtenir une partie réelle normalisée et une partie imaginaire normalisée ; et

l'utilisation de la partie réelle normalisée et de la partie imaginaire normalisée en tant que la caractéristique de voix de l'échantillon de voix.

7. Procédé selon la revendication 6, dans lequel une structure de réseau d'entraînement du réseau neuronal profond comprend en outre un réseau orienté caractéristiques ; pour chaque caractéristique de sous-voix à traiter de la sous-voix, la détermination, dans le réseau entièrement connecté multi-têtes, d'un réseau entièrement connecté correspondant à un intervalle de direction dans lequel une direction indiquée par les informations de direction de la sous-voix est située, et l'utilisation du réseau entièrement connecté en tant qu'un réseau entièrement connecté dans lequel la caractéristique de sous-voix à traiter doit être entrée comprend : pour chaque caractéristique de sous-voix à traiter de la sous-voix, la détermination, en utilisant le réseau orienté caractéristiques, dans le réseau entièrement connecté multi-têtes, du réseau entièrement connecté correspondant à l'intervalle de direction dans lequel la direction indiquée par les informations de direction de la sous-voix est située, et l'utilisation du réseau entièrement connecté en tant que le réseau entièrement connecté dans lequel la caractéristique de sous-voix à traiter doit être entrée.

8. Procédé selon la revendication 6, dans lequel la détermination si l'échantillon de voix comporte ou non une sous-voix dans chacun de la pluralité d'intervalles de direction en utilisant le réseau entièrement connecté multi-têtes comprend : pour chaque caractéristique de sous-voix à traiter, l'utilisation de la caractéristique de sous-voix à traiter pour une propagation directe sur le réseau entièrement connecté correspondant pour obtenir une probabilité que l'échantillon de voix comporte la sous-voix dans chacun de la pluralité d'intervalles de direction.

9. Procédé selon la revendication 6, dans lequel l'entraînement du réseau neuronal profond sur la base du résultat de prédiction pour obtenir un réseau neuronal profond entraîné comprend :
la réalisation d'une propagation inverse dans la structure de réseau d'entraînement sur la base de la probabilité obtenue, pour mettre à jour un paramètre du réseau neuronal convolutif et un paramètre du réseau entièrement connecté multi-têtes.

10. Procédé selon la revendication 9, dans lequel la réalisation d'une propagation inverse dans la structure de réseau d'entraînement sur la base de la probabilité obtenue pour mettre à jour un paramètre du réseau neuronal convolutif et un paramètre du réseau entièrement connecté multi-têtes comprend :

pour chaque probabilité obtenue, la détermination d'une valeur de perte correspondant à la probabilité, et la réalisation d'une propagation inverse dans le réseau entièrement connecté qui obtient la probabilité en utilisant la valeur de perte, pour obtenir un premier résultat correspondant à la probabilité ;
la fusion des premiers résultats obtenus en utilisant le réseau orienté caractéristiques pour obtenir un ensemble de premiers résultats ; et
la réalisation d'une propagation inverse dans le réseau neuronal convolutif en utilisant l'ensemble de premiers résultats pour mettre à jour le paramètre du réseau neuronal convolutif et le paramètre du réseau entièrement connecté multi-têtes.

11. Appareil pour détecter une voix, dans lequel l'appareil comprend des unités pour réaliser le procédé selon l'une quelconque des revendications 1 à 5 ou selon l'une quelconque des revendications 6 à 10.

12. Dispositif électronique, comprenant :

un ou plusieurs processeurs (601) ; et
un appareil de stockage (602) stockant un ou plusieurs programmes,
dans lequel les un ou plusieurs programmes, lorsqu'ils sont exécutés par les un ou plusieurs processeurs, amènent les un ou plusieurs processeurs à mettre en œuvre le procédé selon l'une quelconque des revendications 1 à 5 ou selon l'une quelconque des revendications 6 à 10.

13. Support de stockage lisible par ordinateur, stockant un programme informatique sur celui-ci, dans lequel le programme, lorsqu'il est exécuté par un processeur, met en œuvre le procédé selon l'une quelconque des revendications 1 à 5 ou selon l'une quelconque des revendications 6 à 10.

Fig. 1

<u>200</u>

201

┌─────────────────────────────────────────────┐
│                                             │
│         Acquiring a target voice            │
│                                             │
└─────────────────────────────────────────────┘

202

┌─────────────────────────────────────────────┐
│  Inputting the target voice into a pre-trained deep neural  │
│ network to obtain whether the target voice has a sub-voice  │
│ in each of a plurality of preset direction intervals, the deep │
│ neural network being used to predict whether a voice has a  │
│   sub-voice in each of the plurality of direction intervals  │
└─────────────────────────────────────────────┘

# Fig. 2

302

┌─────────────────────────┐
│      Target voice       │
└─────────────────────────┘

303

┌─────────────────────────┐
│    Prediction result    │
└─────────────────────────┘

301

# Fig. 3A

Prediction result

Concate layer

| Softmax layer | Softmax layer | Softmax layer |

| Affine layer | Affine layer | Affine layer |

| Fully connected layer | Fully connected layer | Fully connected layer |

Convolutional
neural network

Feature-extraction
network

Fourier transform
network

Voice signal

Fig. 3B

400

401

Acquiring a training sample

402

Inputting the voice sample into the deep neural network
to obtain a prediction result

403

Training the deep neural network based on the prediction
result, to obtain a trained deep neural network

Fig. 4A

Loss value    Loss value    Loss value

| Softmax layer | | Softmax layer | | Softmax layer |
|---|---|---|---|---|
| Affine layer | | Affine layer | | Affine layer |
| Fully connected layer | | Fully connected layer | | Fully connected layer |

Feature-oriented
network

Convolutional neural
network

Direction of arrival
information for
respective impact
responses

Feature-extraction
network

Fourier transform
network

Omnidirectional
impact response

Multi-channel impact
response simulation

Multi-channel
voice signal

Single-channel voice signal

Fig. 4B

500

Apparatus for detecting a voice

501

Acquisition unit

502

Prediction unit

## Fig. 5

602

Memory

603

Input apparatus

Bus

601

Processor

604

Output apparatus

## Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S.CHAKRABARTY ; E.A.P. HABETS.** BROAD-BAND DOA ESTIMATION USING CONVOLUTIONAL NEURAL NETWORKS TRAINED WITH NOISE SIGNALS. *2017 IEEE Workshop on Applications of Signal Processing to Audio and Acoustics*

- **R.VARZANDEH et al.** EXPLOITING PERIODICITY FEATURES FOR JOINT DETECTION AND DOA ESTIMATION OF SPEECH SOURCES USING CONVOLUTIONAL NEURAL NETWORKS. *IEEE ICASSP,* 2020